# EUROPEAN PATENT APPLICATION

(11) **EP 1 386 756 A2**
(43) Date of publication of application: **04.02.2004**
(21) Application number: 03015621.0
(22) Date of filing: 16.07.2003
(51) Int. Cl.: B60B 21/06

(54) **Rim for bicycle wheel and the like**

(30) Priority: 02.08.2002 IT PD20020213
(71) Applicant: Ronda High Tech S.r.l., 36010 Zané (Prov. of Vicenza) (IT)
(72) Inventor: Ronda, Giovanni, 36016 Thiene (Prov. of Vicenza) (IT)
(74) Representative: Modiano, Guido, Dr.-Ing.

(57) **Abstract**

A rim for bicycle wheel and the like, of the type that comprises a circumferential core (11) that has substantially no structural function and is covered by layers (12) of fabric (13) made of stiffened composite material; the layers (12) form, toward the outside of the rim (10), an outer peripheral radial portion (14) for reference of the tire of the wheel and, on the sides of the core (11), lateral portions (17) that are mutually joined on the opposite side of the outer peripheral radial portion (14) with respect to the core (11), thus forming an inner peripheral radial portion (18); the rim (10) comprises bushes (20) for fixing spokes (21) of the wheel which are embedded in the inner peripheral radial portion (18); the bushes (20) are supported and locked monolithically by a sandwich-like fixing between the layers (12) of the fabric (13).

## Description

The present invention relates to a rim for bicycle wheel and the like.

Currently, the trend of the bicycle market is toward materials that are ever lighter with an equal mechanical performance, in order to reduce the masses and accordingly increase the performance that can be achieved.

This trend is particularly felt in the field of racing and off-road bicycles.

Currently, the innovative materials used are typically alloys of aluminum or titanium as regards the frame and various composite materials (carbon fibers, Kevlar, glass fibers, et cetera) as regards the remaining components: rims, handlebars, pedal cranks, saddles, et cetera.

As regards rims made of composite material, various kinds are known depending on whether tubeless tires or tires of the type with a tread and an inner tube are to be fitted.

The general structural definition of the rim is in any case independent of the type of material that is used to manufacture it.

The wheel in fact can be described schematically substantially as an outer peripheral radial portion for tire reference and an inner peripheral radial portion, where the bushes and the corresponding nipples for fixing and adjusting the spokes of the wheel are fitted.

When using a tubeless tire or a tread with inner tube, two mutually opposite circumferential ribs protrude radially on the sides at the outer peripheral radial portion and act as an anchoring for said tire.

As regards the bushes, they are fixed to the rim by means of equidistant through holes in the outer and inner peripheral radial portions.

If the rim is fitted with tubeless tires, an interspace is formed between the outer peripheral radial portion and the inner peripheral radial portion, and the assembly holes are formed exclusively in the inner peripheral radial portion.

This is due to the fact that the tire and the outer peripheral radial portion must form a hermetic chamber.

It is therefore evident that the assembly of the spoke fixing bushes requires particular work on the rim, both to provide the hole suitable to accommodate the bushes and in the assembly and fixing of the bushes inside the hole.

These operations are more complicated in the case of rims for tubeless tires.

In this case, the hole through the inner peripheral radial portion in fact ends with a closed interspace, in practice forming a blind hole.

This makes it difficult to insert and especially lock the bushes in the corresponding holes, accordingly requiring particular refinements and locking elements.

The aim of the present invention is to provide a rim for bicycle wheel and the like that solves the above-noted problems in bicycle rims of a known type.

Within this aim, an object of the present invention is to provide a rim for bicycle wheel and the like that allows to reduce the elements and work required to manufacture rims for bicycles of a known type.

Another object of the present invention is to provide a rim for bicycle wheel that is particularly strong.

Another object of the present invention is to provide a rim for bicycle wheel that is simple and allows to fit any type of tire.

Another object of the present invention is to provide a rim for bicycle wheel that is lightweight.

Another object of the present invention is to provide a rim for bicycle wheel that can be manufactured with known equipment and technologies.

This aim and these and other objects that will become better apparent hereinafter are achieved by a rim for bicycle wheel and the like, of the type that comprises a circumferential core that has substantially no structural function and is covered by layers of fabric made of composite material that is stiffened so as to form, toward the outside of said rim, an outer peripheral radial portion for reference of the tire of said wheel and, on the sides of said core, lateral portions that are mutually joined on the opposite side of said outer peripheral radial portion with respect to said core, thus forming an inner peripheral radial portion, said rim being characterized in that it comprises bushes for fixing the spokes of said wheel which are embedded in said inner peripheral radial portion, said bushes being supported and locked monolithically by a sandwich-like fixing between the layers of said fabric.

Further characteristics and advantages of the invention will become better apparent from the following detailed description of a preferred but not exclusive embodiment of the invention, illustrated by way of non-limitative example in the accompanying drawings, wherein:
Figure 1 is a perspective sectional view of a portion of the rim according to the invention;
Figure 2 is a transverse sectional view of the rim according to the invention;
Figure 3 is an enlarged-scale sectional view, taken along a longitudinal plane, of a portion of the rim according to the invention;
Figure 4 is a perspective view of a component of the rim according to the invention;
Figure 5 is an enlarged-scale longitudinal sectional view of a portion of the rim according to an alternative embodiment of the invention;
Figure 6 is a perspective view of a component of the rim according to the embodiment of the invention shown in Figure 5.

With reference to the figures, a rim for bicycle wheel according to the invention is generally designated by the reference numeral 10.

The rim 10 comprises a circumferential core 11, which in this embodiment is made of plastics.

As an alternative, the material of which the core is made can be metallic, such as aluminum, titanium and alloys thereof or in any case another lightweight material.

The core 11 substantially has no structural function and merely acts as a support for cladding it with layers 12 of fabric 13 made of stiffened composite material.

In this embodiment, the core 11 has a transverse cross-section that tapers toward the center of the rim 10a.

The composite material that composes the stiffened fabric 13 is, in this embodiment, carbon fiber bonded with polymerizing products, but as an alternative it is possible to provide such fabric 13 by means of glass fiber, Kevlar fiber or similar fibers, all bonded with polymerizing products.

The core 11 is covered by the layers 12 of the fabric 13 so as to form, toward the outside of the rim 10, an outer' peripheral radial portion 14 that acts as a reference for a tire (not shown in the figures) that is mounted on the rim 10a of the wheel (also not shown in the figures).

The layers 12 form, on the sides of the core 11, lateral portions 17, which are mutually joined on the opposite side with respect to the outer peripheral radial portion 14 relative to the core 11, thus forming an inner peripheral radial portion 18.

The lateral portions 17 protrude beyond the outer peripheral radial portion 14, so as to form in this manner two mutually opposite circumferential ribs 19 that are designed to anchor the tire.

Bushes 20 for fixing spokes 21 of the wheel to the rim 10a are embedded in the inner peripheral radial portion 18.

The bushes 20 are supported and locked monolithically by way of a sandwich-like fixing between corresponding layers 12 of the fabric 13.

The bushes 20 are mutually equidistant along the extension of the rim 10a.

Moreover, the bushes 20 are provided externally with mutually opposite portions 22, which are flared toward the core 11 and are such as to contrast release from the sandwich-like fixing between the layers 12.

In particular, each bush 20 comprises a first cylindrical part 23, from one end of which a second flared part 23a protrudes.

Each bush is provided with a through hole 24 that lies axially with respect to the cylindrical part 23, and inside the hole 24 there is a thread 25 for coupling to a corresponding nipple 26 for adjusting the tension of the corresponding spoke 21.

The nipple 26 is of the bushing-like type, with an end edge 26a that is contoured so that it can be gripped by a spoke tensioning tool (not shown in the figures).

On the outer surface of the nipple 26 there is a complementary thread 25a for coupling to the thread 25, and on the inner surface there is a thread 27 that is orientated in reverse with respect to the thread 25 for coupling to the complementary thread 27a that is provided at the end of the corresponding spoke 21.

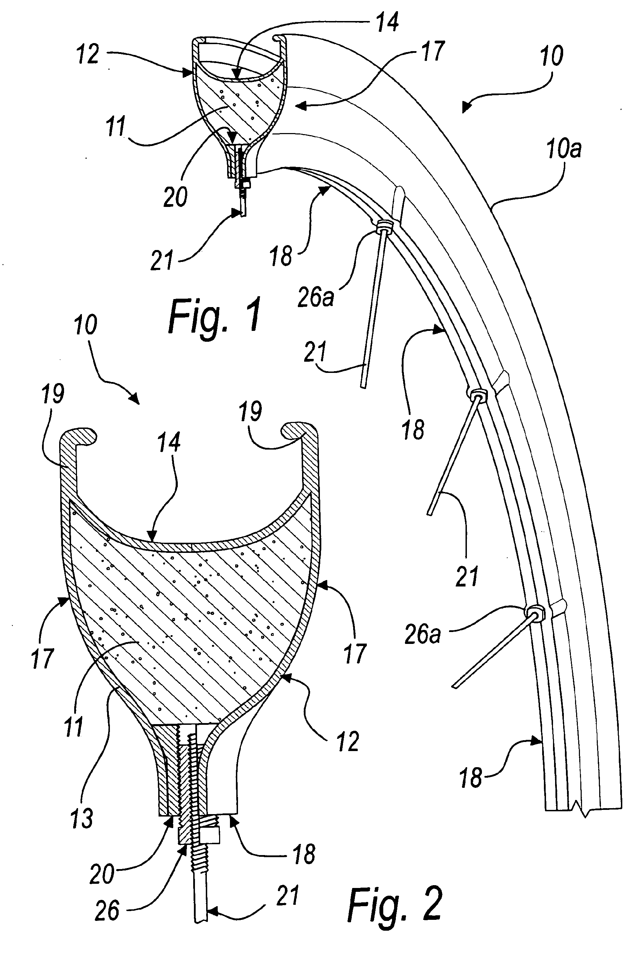

In this embodiment, shown in Figures 1, 2 and 3, the thread 25 is constant and parallel to the plane of extension of the rim 10a for all the bushes 20, so that the corresponding spokes 21 all lie on a same plane.

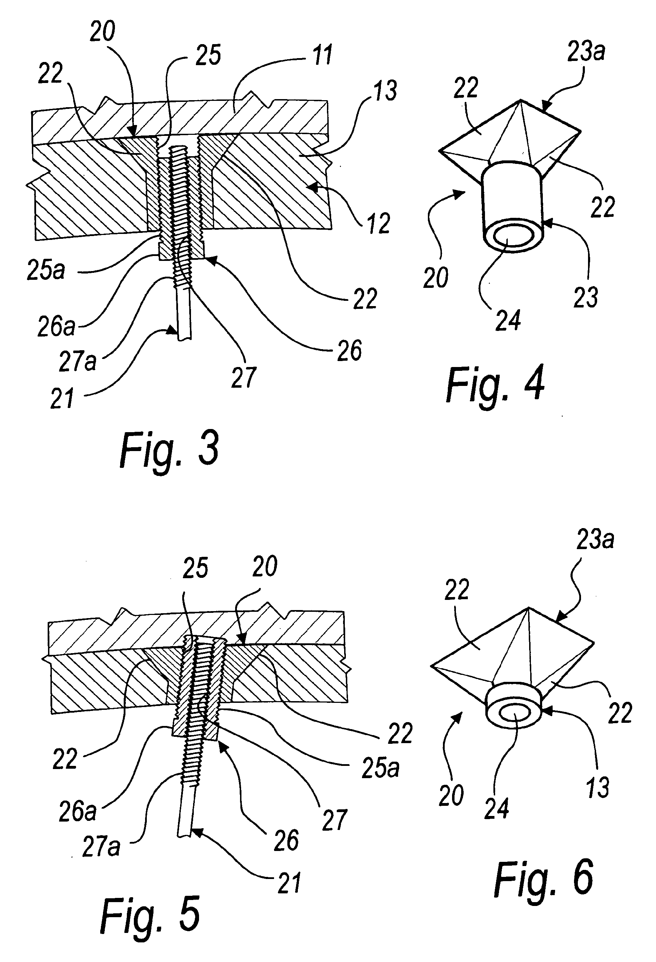

As an alternative, in an embodiment shown in Figures 5 and 6, the inclination of the thread 25 varies between contiguous bushes 20 along the extension of the rim 10a, so that individually alternating spokes 21 have the same inclination with respect to the plane of arrangement of the rim 10a.

The tire is of the tubeless type in this embodiment.

As an alternative, the tire may be of the type that comprises a tread and an inner tube or of the tubular type.

In practice it has been found that the invention thus described solves the problems noted in known types of rim for bicycle wheel and the like; in particular, the present invention provides a rim for bicycle wheel and the like that reduces the components and treatments required to manufacture rims for bicycles and the like of a known type.

It should be noted, for example, that the embedding of the fixing bushes inside the layered structure of the fabric made of composite material eliminates the operations for forming holes and assembling the bushes inside the rim, while still ensuring optimum structural strength.

Moreover, the present invention provides a rim for bicycle wheel and the like that is particularly strong.

Further, the present invention provides a rim for bicycle wheel and the like that is simple and allows to fit any type of tire.

Not least, the present invention provides a rim for bicycle wheel and the like that is made of a material that is particularly lightweight and at the same time extremely strong.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2002A000213 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A rim for bicycle wheel and the like, of the type that comprises a circumferential core (11) that has substantially no structural function and is covered by layers (12) of fabric (13) made of composite material that is stiffened so as to form, toward the outside of said rim (10), an outer peripheral radial portion (14) for reference of the tire of said wheel and, on the sides of said core (11), lateral portions (17) that are mutually joined on the opposite side of said outer peripheral radial portion (14) with respect to said core (11), thus forming an inner peripheral radial portion (18), said rim (10) being **characterized in that** it comprises bushes (20) for fixing spokes (21) of said wheel which are embedded in said inner peripheral radial portion (18), said bushes being supported and locked monolithically by a sandwich-like fixing between the layers (12) of said fabric (13).

2. The rim according to one or more of the preceding claims, **characterized in that** said bushes (20) are provided externally with mutually opposite portions (22) that are flared toward said core (11) and contrast disengagement from said sandwich-like fixing.

3. The rim according to one or more of the preceding claims, **characterized in that** each bush (20) is provided internally with a thread (25) for coupling to a respective nipple (26) for adjusting the tension of the corresponding spoke (21), the inclination of said thread (25) varying between contiguous bushes (20) along the extension of said rim (10a).

4. The rim according to one or more of the preceding claims, **characterized in that** each bush (20) is provided internally with a thread (25) for coupling to a respective nipple (26) for adjusting the tension of the corresponding spoke (21), the inclination of said thread (25) being constant and parallel to the plane of extension of said rim (10a) for all of said bushes (20).

5. The rim according to one or more of the preceding claims, **characterized in that** each one of said bushes (20) comprises a first cylindrical part (23), from one end of which a second flared part (23a) protrudes.

6. The rim according to one or more of the preceding claims, **characterized in that** said core (11) has a transverse cross-section that tapers toward the center of said rim (10a).

7. The rim according to one or more of the preceding claims, **characterized in that** said core (11) is made of plastic material.

8. The rim according to one or more of the preceding claims, **characterized in that** said core is made of a metallic material such as aluminum, titanium or other lightweight material.

9. The rim according to one or more of the preceding claims, **characterized in that** said material that composes said stiffened composite fabric (13) is made of glass fiber, Kevlar fiber or carbon fiber, bonded with polymerizing products.

10. The rim according to claim 1, **characterized in that** said lateral portions (17) protrude beyond said outer peripheral radial portion (14) so as to form two mutually opposite circumferential ribs (19) that are designed to anchor said tire.

11. The rim according to one or more of the preceding claims, **characterized in that** said tire is of the tubeless type.

12. The rim according to one or more of the preceding claims, **characterized in that** said tire is of the type that comprises a tread and an inner tube.

13. The rim according to one or more of the preceding claims, **characterized in that** said tire is of the tubular type.
